# FASCICULE DE BREVET EUROPEEN

(11) **EP 0 588 679 B1**
(45) Date de publication et mention de la délivrance du brevet: **22.10.1997**
(21) Numéro de dépôt: 93402111.4
(22) Date de dépôt: 27.08.1993
(51) Int. Cl.: F16F 7/12

(54) **Absorbeur d'énergie perfectionné et son application notamment aux véhicules terrestres**
Verfahren, Bremsgerät und ausgestattetes Kraftfahrzeug
Procedure, brake device and equiped vehicle

(30) Priorité: 15.09.1992 FR 9210981
(43) Date de publication de la demande: 23.03.1994
(73) Titulaire: ECIA - EQUIPEMENTS ET COMPOSANTS POUR L'INDUSTRIE AUTOMOBILE, F-25400 Audincourt (FR)
(72) Inventeur: Pata, Martial, F-25420 Voujeaucourt (FR); Trassaert, Patrick, F-25400 Audincourt (FR); Laurent, Claude, F-25420 Voujeaucourt (FR)
(74) Mandataire: Moncheny, Michel

(56) Documents cités:
- EP-A- 0 054 493
- EP-A- 0 462 450
- WO-A-86/00051
- FR-A- 2 146 785
- FR-A- 2 402 551
- US-A- 3 944 271

## Description

La présente invention concerne les absorbeurs d'énergie et, plus particulièrement, ceux d'entre eux qui sont notamment destinés à contribuer à la protection des véhicules automobiles terrestres.

La présente invention est plus particulièrement relative à un absorbeur d'énergie longiligne extrudé et à son application notamment à la protection des véhicules automobiles.

Dans de nombreux secteurs industriels, il est nécessaire d'absorber l'énergie résultant de chocs importants et c'est tout spécialement le cas du domaine des véhicules automobiles terrestres dont il faut assurer la sécurité des occupants en cas de collision ou d'accidents.

Pour la sécurité des véhicules automobiles terrestres, on a déjà proposé de construire notamment leur partie antérieure de manière à ce qu'elle offre une protection en zones ou tranches successives, qui sont mises à contribution progressivement de l'avant vers l'arrière, repérées par rapport à l'axe longitudinal du véhicule. C'est ainsi qu'on distingue habituellement une zone pour les "petits" chocs se produisant pour une vitesse relative ne dépassant pas 4 km/h environ et qui est constituée par la "peau" ou garniture d'un pare-choc ou bouclier, une zone pour les chocs "moyens" se produisant pour une vitesse relative de l'ordre de 4-10 km/h environ et qui est constituée par la "poutre" ou similaire formant le pare-choc ou bouclier proprement dit qui entre 4-8 km/h environ se déforme élastiquement réversiblement et qui entre 8-10 km/h environ se déforme non réversiblement, une zone pour les "grands" chocs se produisant pour une vitesse relative de l'ordre de 10-12 km/h et qui est constituée par des "tampons" ou similaires associés à la structure ou coque du véhicule en amont des longerons qui la prolongent vers l'avant, et enfin une zone pour les chocs "violents" se produisant pour une vitesse relative de l'ordre de 20-25 km/h environ ou plus et qui est constituée par les longerons ou similaires eux-mêmes. Une telle configuration permet en particulier une réparation éventuelle, facilitée par un échange standard de la seule zone atteinte après vérification immédiate que les longerons n'ont pas été affectés, ce qui nécessiterait un passage "au marbre" de la coque ou structure pour la dégauchir.

Diverses solutions ont déjà été proposées. Des exemples de solution sont par exemple exposés dans les documents FR 87-06 734, FR 89-16 413, FR 90-13 567, FR 90-16 495 et FR 91-07 539 de la Demanderesse.

D'autres solutions sont enseignées par les documents EP 0 462 450 et WO 86/00051. La solution selon le document européen comprend deux parties distinctes et indépendantes l'une de l'autre qui doivent être réunies pour coopérer ensembles. La solution selon le document international a un mode de fonctionnement unique qui opère seulement dans le domaine élastique.

Si ces solutions donnent relativement satisfaction, elles sont toutefois compliquées car elles nécessitent la mise en oeuvre d'absorbeurs d'énergie de structure et de nature complexes.

Le but de l'invention est de remédier à ce type d'inconvénients à l'aide d'un absorbeur d'énergie facile à fabriquer et à installer et d'une grande efficacité.

L'invention a pour objet un absorbeur d'énergie d'un type de celui exposé dans le document WO 86/00051 dont tous les éléments qu'il divulgue et qui sont nécessaires à l'invention sont mentionnés dans le préambule de la revendication 1. Les particularités de l'invention sont énoncées dans la partie caractérisante de la revendication 1.

L'invention a aussi pour objet l'application d'un absorbeur du type indiqué auparavant à la protection des véhicules automobiles.

D'autres caractéristiques de l'invention apparaîtront à la lecture de la description et des revendications qui suivent ainsi qu'à l'examen du dessin annexé, donné seulement à titre d'exemple, où :
- les Figures 1A et 1B sont des vues en coupe schématiques de deux modes de réalisation d'un absorbeur selon l'invention dans son application à un véhicule;
- les Figures 2A à 2D sont des vues analogues à celle de la Figure 1A d'une variante d'exécution d'un absorbeur selon l'invention illustré dans différents stades de son comportement.

Les absorbeurs d'énergie et tout spécialement ceux qui sont destinés à être associés à des véhicules automobiles notamment terrestres, étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit son mode de réalisation ou sa variante d'exécution.

Pour la commodité de l'exposé, on décrira successivement chacun des constituants d'un absorbeur d'énergie perfectionné selon l'invention, avant d'en exposer la fabrication au besoin, et le fonctionnement ou le comportement.

Par la suite, on décrira un absorbeur d'énergie perfectionné selon l'invention dans son application particulière aux véhicules automobiles terrestres et, plus spécialement, pour le cas où il est utilisé pour subir et absorber l'énergie engendrée par un effort de direction donnée, à la suite d'un "grand" choc au sens précédemment exposé, se produisant pour une vitesse relative de l'ordre de 10-12 km/h environ.

Comme on le sait dans une telle application particulière, un absorbeur d'énergie perfectionné selon l'invention est disposé en amont des longerons qui prolongent vers l'avant la structure ou coque d'un véhicule, et pour ce faire cet absorbeur est inséré de préférence, d'une part entre les longerons L et, d'autre part, une façade avant ou un pare-choc F qui précède les longerons. Cet absorbeur est intercalé entre les parties qui lui font face et leur est relié à l'aide de tous dispositifs appropriés classiques connus, convenablement adaptés, sur lesquels il n'est pas nécessaire de s'étendre plus longuement.

Un absorbeur d'énergie perfectionné selon l'invention est destiné à subir et absorber, au moins en partie l'énergie engendrée par un effort C de direction donné qui, pour l'application particulière visée, a une composante essentiellement longitudinale ou parallèle, repérée par rapport à l'axe du véhicule.

L'absorbeur est fait d'un corps 10 en profilé creux obtenu par extrusion. Le corps 10 longiligne présente un axe longitudinal 100 donné, et comprend une enveloppe 11 extérieure de configuration géométrique 110 donnée en section droite perpendiculaire à l'axe 100. Cette enveloppe 11 est définie, délimitée par une paroi 111 extérieure et une paroi 112 intérieure de manière à avoir une épaisseur E donnée et une dimension T transversale donnée perpendiculairement à l'axe 100.

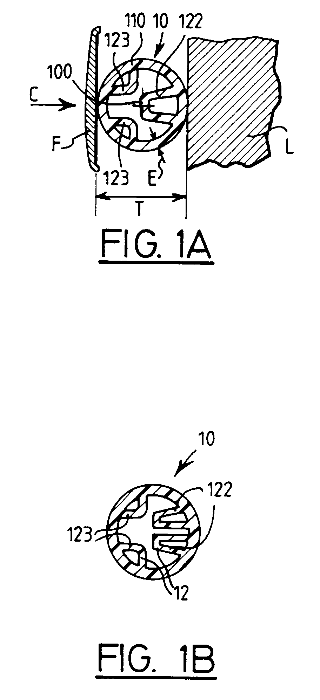

Comme on le voit en particulier sur les vues schématiques de la Figure 1, selon l'invention, cet absorbeur est destiné à être placé de manière que son axe 100 soit pratiquement orthogonal à la direction de l'effort à subir et absorber c'est-à-dire orthogonal à l'axe longitudinal du véhicule. Pour l'application particulière illustrée sur la Figure 1A, l'axe longitudinal 100 est pratiquement horizontal. Il est clair que rien ne s'oppose à ce que cet axe longitudinal soit vertical ou oblique mais il est alors toujours situé dans un plan qui est pratiquement perpendiculaire à l'axe longitudinal du véhicule.

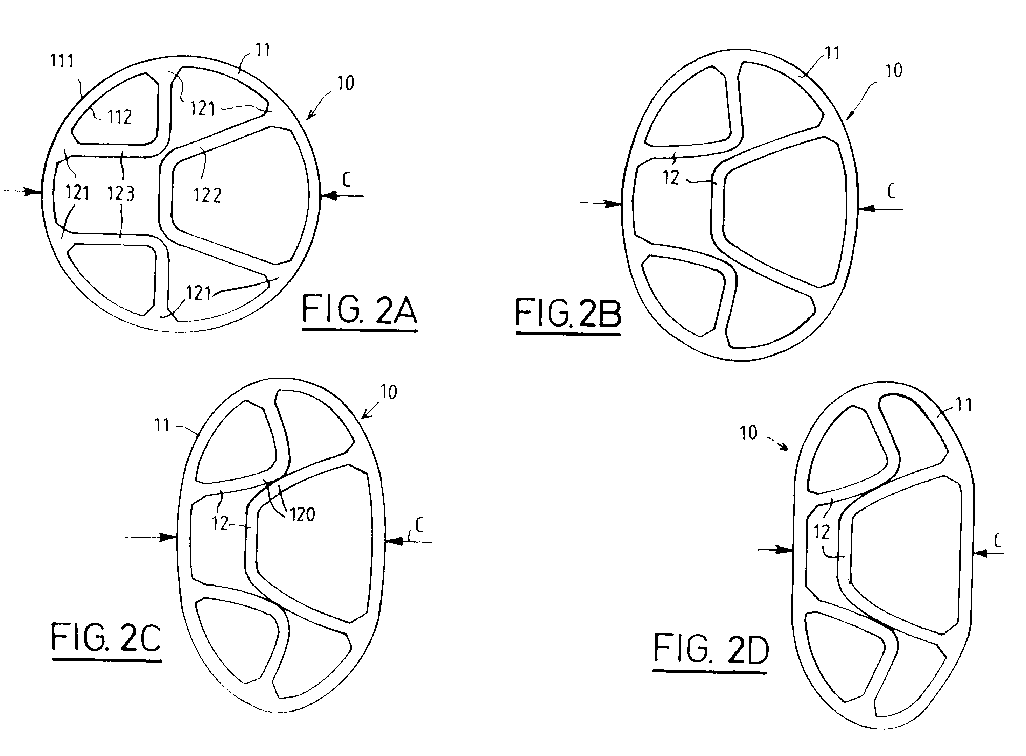

Comme on le voit sur les vues de la Figure 1 et sur les vues A à D de la Figure 2 notamment, la configuration géométrique 110 de l'enveloppe 11 est une courbe au moins pour partie. Cette configuration géométrique peut aussi être un polygone. Dans ce dernier cas, deux sommets opposés sont, de préférence, disposés sur une droite pratiquement perpendiculaire à la direction de l'effort à subir et absorber.

L'épaisseur E de l'enveloppe 11 est pratiquement constante, ou bien présente un amincissement local dans la zone d'au moins un sommet et de préférence, dans la zone de deux sommets opposés qui sont disposés sur la droite perpendiculaire à la direction de l'effort à subir et absorber, indiqué précédemment.

L'enveloppe 11 présente au moins un renfort 12 intérieur de profil 120 déterminé, avec des extrémités 121 reliées à la paroi intérieure 112 selon des lignes pratiquement parallèles à l'axe 100.

Comme on le voit sur les diverses vues de la Figure 2, les deux lignes des extrémités 121 définissent un plan qui est pratiquement perpendiculaire à la direction de l'effort à subir et à absorber, ou bien qui n'est pas perpendiculaire à cette direction et est alors oblique relativement à elle.

Selon la variante d'exécution illustrée sur les diverses vues de la Figure 1, l'absorbeur selon l'invention comprend un corps 10 dans l'enveloppe 11 duquel sont situés deux renforts 12 intérieurs qui sont distincts et qui sont faits, chacun, d'un élément 122, 123. On notera que ces éléments sont disposés en vis-à-vis selon la direction de l'effort à subir et à absorber. Comme on le voit, ces éléments 122, 123 présentent des formes coopérantes qui sont aptes à engendrer des forces de frottement lorsqu'elles viennent au contact sous l'action de l'effort à subir et absorber.

L'un 122 de ces éléments est, de préférence, de profil 120 cunéiforme en section droite, simple (Figure 1A) ou double (Figure 1B). L'autre 123 de ces éléments qui lui fait face, présente un profil 120 en équerre de préférence double (Figures 1A, 1B).

L'absorbeur perfectionné selon l'invention est obtenu, comme indiqué auparavant, par extrusion. Pour cela, on utilise des matériaux métalliques ou des matériaux synthétiques telles que des polymères thermoplastiques. Le polyéthylène et le polypropylène haute densité conviennent particulièrement bien.

D'une manière inattendue, il a été constaté que le comportement d'un tel amortisseur selon l'invention est pratiquement proportionnel à la longueur du corps mesuré selon son axe longitudinal.

Les diverses vues de la Figure 2 illustrent le comportement à l'écrasement, vu en section droite perpendiculairement à l'axe longitudinal, de deux modes de réalisation d'un absorbeur selon l'invention.

L'effort à subir et absorber tend à réduire la dimension transversale T.

Le mode de réalisation de la Figure 2 absorbe l'énergie à la fois par déformation mécanique et par frottement résultant de l'interaction des formes internes des renforts intérieurs.

Le choix des matériaux, des épaisseurs et des dimensions transversales, par exemple du diamètre, de leur rapport, de même que le choix des profils des renforts permettent d'obtenir un comportement à l'écrasement, notamment statique, qui évolue par paliers en fonction de l'effort subi.

On notera que l'épaisseur de l'enveloppe 11 et celle du renfort 12 peuvent être égales ou différentes, soit inférieures soit supérieures, et, aussi que l'une ou les deux de ces épaisseurs peuvent être constantes ou variables afin de créer par exemple des zones de moindre résistance qui ont une incidence sur le comportement effort/déformation.

Le comportement de l'absorbeur selon l'invention peut être modifié par une substance de garnissage emplissant totalement ou localement son volume intérieur. On utilise une substance telle que par exemple une mousse apte à se comprimer lors de la déformation par écrasement de l'absorbeur. Une telle substance a alors un double effet puisqu'elle contribue d'abord à l'absorption de l'énergie et ensuite arrête l'écrasement de l'absorbeur lorsqu'il a atteint une configuration qui rend la substance de remplissage incompressible.

En utilisant des tubes de polyéthylène haute densité du commerce de diamètre 110 mm environ et d'épaisseur 10 mm environ pour un tronçon de longueur axiale 100 mm environ, on peut absorber une force de l'ordre de 5,2 kN environ.

Le comportement dynamique d'un tronçon de longueur axiale 500 mm de ce même tube de diamètre 110 mm environ et d'épaisseur 10 mm environ soumis à un essai au "mouton pendulaire" de masse 850 kg, entre deux plaques planes, est le suivant:

| | | | | |
|---|---|---|---|---|
| Vitesse (km/h) | 2,1 | 3,95 | 5,94 | 8,52 |
| Ecrasement (mm) | 8,3 | 17 | 31 | 56 |
| Effort (kN) | 15 | 22 | 27 | 35 |

En fin d'essai, le tronçon est ovalisé et au point d'impact le diamètre est réduit de 8 mm environ.

Suivant le besoin, on peut disposer de front plusieurs absorbeurs selon l'invention, identiques ou non, de manière à ce que leurs axes longitudiaux soient orthogonaux à l'axe longitudinal du véhicule, parallèles entre eux ou non.

Afin de générer les forces de frottement que sont aptes à engendrer les éléments en vis-à-vis des renforts lorsqu'ils viennent en contact sous l'action de l'effort à subir et à absorber, on donne de préférence aux surfaces qui doivent coopérer une nature et/ou un profil approprié(s). Pour ce faire, on peut par exemple augmenter la rugosité de ces surfaces par des ondulations, par sablage ou par des charges superficielles par exemple en corindon ou bien à l'aide de toute technique appropriée similaire.

Afin d'améliorer le comportement à l'écrasement de l'absorbeur pour que son enveloppe ne se gonfle pas de manière centrifuge dans un plan pratiquement perpendiculaire à son axe longitudinal, on donne à cette enveloppe une configuration géométrique qui favorise une déformation centripète, par exemple par une amorce de flambage ou flambement vers l'intérieur, en direction de l'axe.

Ainsi on évite d'endommager les parties ou équipements du véhicule tels les blocs optiques ou la tôlerie qui sont contigüs aux absorbeurs selon l'invention.

On comprend tout l'intérêt d'un absorbeur d'énergie selon l'invention en particulier pour son application à l'industrie automobile puisqu'il suffit de débiter le profilé creux extrudé longiligne à la longueur voulue et d'utiliser un ou plusieurs tronçons judicieusement répartis pour satisfaire aux besoins et obtenir les effets recherchés.

## Revendications

1. Absorbeur d'énergie engendrée par un effort de direction donnée, qui est fait d'un corps (10) en profilé creux monobloc longiligne d'axe longitudinal (100) donné qui comprend une enveloppe (11) extérieure qui est de configuration géométrique (110) donnée en section droite perpendiculaire à l'axe (100) et qui est définie par une paroi (111) extérieure et une paroi (112) intérieure de manière à avoir une épaisseur (E) donnée et une dimension (T) transversale donnée perpendiculairement à l'axe (100) et qui est destiné à être placée de manière que son axe (100) soit pratiquement orthogonal à la direction de l'effort à subir et absorber, cet effort tendant à réduire la dimension transversale (T) du corps, absorbeur caractérisé en ce que le corps (10) est obtenu par extrusion et en ce qu'il comprend deux renforts (12) intérieurs qui sont distincts et qui sont faits, chacun, d'un élément (122,123) disposés en vis-à-vis selon la direction de l'effort à subir et absorber et qui présentent des formes coopérantes permettant, d'une part, un encastrement de ces formes provoquant une expansion transversale à la direction de l'effort de l'absorbeur d'énergie se superposant à l'expansion transversale résultant de la réduction de la dimension transversale (T) du corps, et d'autre part, d'engendrer des forces de frottement lorsqu'elles viennent au contact sous l'action de l'effort à subir et à absorber.

2. Absorbeur selon la revendication 1, caractérisé en ce que l'un (122) des éléments (122,123) est cunéiforme.

3. Absorbeur selon l'une quelconque des revendications 1 ou 2, caractérisé en ce que l'autre (123) des éléments (122,123) présente un profil (120) courbe, voire en équerre.

4. Absorbeur selon l'une quelconque des revendications 1 à 3, caractérisé en ce que la configuration géométrique (110) est une courbe au moins pour partie.

5. Absorbeur selon l'une quelconque des revendications 1 à 3, caractérisé en ce que la configuration géométrique (110) est un polygone.

6. Absorbeur selon l'une quelconque des revendications 1 à 5, caractérisé en ce que l'épaisseur (E) est constante.

7. Absorbeur selon la revendication 5, caractérisé en ce que l'épaisseur (E) présente un Amincissement local dans la zone d'au moins un sommet.

8. Absorbeur selon la revendication 7, caractérisé en ce que l'épaisseur (E) présente un amincissement local dans la zone de deux sommets opposés disposés sur une droite pratiquement perpendiculaire à la direction de l'effort à subir et absorber.

9. Absorbeur selon l'une quelconque des revendications 1 à 8, caractérisé en ce qu'il comprend au moins un renfort (12) intérieur de profil (120) déterminé avec des extrémités (121) reliées à la paroi intérieure (112) selon des lignes pratiquement parallèles à l'axe (100).

10. Absorbeur selon la revendication 9, caractérisé en ce que les deux lignes des extrémités (121) définissent un plan qui n'est pas perpendiculaire à la direction de l'effort à subir et à absorber.

11. Absorbeur selon la revendication 9, caractérisé en ce que les deux lignes des extrémités (121) définissent un plan qui est pratiquement perpendiculaire à la direction de l'effort à subir et à absorber.

12. Application d'un absorbeur selon l'une quelconque des revendications 1 à 11 à la protection des véhicules automobiles.

## Patentansprüche

1. Aufnehmer von Energie, die durch eine Kraft gegebener Richtung erzeugt wird, bestehend aus einem Körper (10) aus einem einstückigen längsförmigen Hohlprofil mit gegebener Längsachse (100), die eine äußere Hülle (11) umfaßt, die eine im Querschnitt gegebene, auf die Achse (100) senkrechte geometrische Gestaltung (110) aufweist und durch eine äußere Wandung (111) und eine innere Wandung (112) definiert ist, so daß sie eine gegebene Dicke (E) und eine gegebene Querabmessung (T) senkrecht zur Achse (100) aufweist, und die dazu bestimmt ist, derart angeordnet zu werden, daß ihre Achse (100) praktisch zu der Richtung der zu ertragenden und aufzunehmenden Kraft orthogonal ist, wobei diese Kraft dazu neigt, die Querabmessung (T) des Körpers zu verkleinern, dadurch gekennzeichnet, daß der Körper (10) durch Extrusion hergestellt wird und daß er zwei innere Verstärkungen (12) umfaßt, die verschieden sind und jeweils aus einem Element (122, 123) bestehen, die je nach der Richtung der zu ertragenden und aufzunehmenden Kraft gegenüber angeordnet sind und zusammenwirkende Formen aufweisen, die einerseits ein Einfügen dieser Formen ermöglichen, was zu einer Ausdehnung des Energieaufnehmers quer zu der Kraftrichtung führt, die die Querausdehnung überlagert, die sich aus der Verringerung der Querabmessung (T) des Körpers ergibt, und die es andererseits ermöglichen, Reibungskräfte zu erzeugen, wenn sie unter der Einwirkung der zu ertragenden und aufzunehmenden Kraft miteinander in Berührung kommen.

2. Aufnehmer nach Anspruch 1, dadurch gekennzeichnet, daß eines (122) der Elemente (122, 123) keilförmig ist.

3. Aufnehmer nach einem der Ansprüche 1 oder 2, dadurch gekennzeichnet, daß das andere (123) der Elemente (122, 123) ein Kurven- bzw. ein Winkelprofil (120) aufweist.

4. Aufnehmer nach einem der Ansprüche 1 bis 3, dadurch gekennzeichnet, daß die geometrische Ausführung (110) zumindest teilweise eine Kurve ist.

5. Aufnehmer nach einem der Ansprüche 1 bis 3, dadurch gekennzeichnet, daß die geometrische Ausführung (110) ein Vieleck ist.

6. Aufnehmer nach einem der Ansprüche 1 bis 5, dadurch gekennzeichnet, daß die Dicke (E) konstant ist.

7. Aufnehmer nach Anspruch 5, dadurch gekennzeichnet, daß die Dicke (E) im Bereich von mindestens einer Spitze eine lokale Verkleinerung aufweist.

8. Aufnehmer nach Anspruch 7, dadurch gekennzeichnet, daß die Dicke (E) im Bereich von zwei gegenüberliegenden Spitzen, die auf einer Geraden angeordnet sind, die praktisch auf die Richtung der zu ertragenden und aufzunehmenden Kraft senkrecht steht, eine lokale Verkleinerung aufweist.

9. Aufnehmer nach einem der Ansprüche 1 bis 8, dadurch gekennzeichnet, daß er mindestens eine innere Verstärkung (12) des Profils (120) umfaßt, welche mit Enden (121) zwangsschlüssig ist, die mit der Innenwandung (112) entlang zur Achse (100) im wesentlichen parallelen Linien verbunden sind.

10. Aufnehmer nach Anspruch 9, dadurch gekennzeichnet, daß die beiden Linien der Enden (121) eine Ebene definieren, die nicht auf die Richtung der zu ertragenden und aufzunehmenden Kraft senkrecht steht.

11. Aufnehmer nach Anspruch 9, dadurch gekennzeichnet, daß die beiden Linien der Enden (121) eine Ebene definieren, die praktisch auf die Richtung der zu ertragenden und aufzunehmenden Kraft senkrecht steht.

12. Verwendung eines Aufnehmers nach einem der Ansprüche 1 bis 11 für den Schutz von Kraftfahrzeugen.

## Claims

1. Absorber for energy generated by a force of given direction, which is made from a body (10) as a long, one-piece, hollow section having a given longitudinal axis (100) which comprises an outer casing (11) which is of given geometric configuration (110) of straight section perpendicular to the axis (100) and which is defined by an outer wall (111) and an inner wall (112) in order to have a given thickness (E) and a given transverse dimension (T) perpendicularly to the axis (100) and which is intended to be placed in order that its axis (100) is virtually at right angles to the direction of the force to be withstood and absorbed, this force tending to reduce the transverse dimension (T) of the body, which absorber is characterised in that the body (10) is obtained by extrusion and that it comprises two inner reinforcements (12) which are separate and which are each made from a member (122, 123) disposed in facing relationship along the direction of the force to be withstood and absorbed and which have cooperating shapes allowing, on the one hand, nesting of these shapes causing a transverse expansion with respect to the direction of the force of the energy absorber superimposed on the transverse expansion resulting from the reduction of the transverse dimension (T) of the body, and on the other hand allowing the production of frictional forces when they come into contact under the action of the force to be withstood and absorbed.

2. Absorber according to Claim 1, characterised in that one (122) of the members (122, 123) is cuneiform.

3. Absorber according to one of Claims 1 or 2, characterised in that the other (123) of the members (122, 123) has a curved, even right-angled section (120).

4. Absorber according to one of Claims 1 to 3, characterised in that the geometric configuration (110) is at least partly a curve.

5. Absorber according to one of Claims 1 to 3, characterised in that the geometric configuration (110) is a polygon.

6. Absorber according to one of Claims 1 to 5, characterised in that the thickness (E) is constant.

7. Absorber according to Claim 5, characterised in that the thickness (E) thins-down locally in the area of at least one vertex.

8. Absorber according to Claim 7, characterised in that the thickness (E) thins-down locally in the area of two opposed vertices disposed on a straight line practically perpendicular to the direction of the force to be withstood and absorbed.

9. Absorber according to one of Claims 1 to 8, characterised in that it comprises at least one inner reinforcement (12) of predetermined section (120) with ends (121) connected to the inner wall (112) along lines virtually parallel to the axis (100).

10. Absorber according to Claim 9, characterised in that the two lines of the ends (121) define a plane which is not perpendicular to the direction of the force to be withstood and to be absorbed.

11. Absorber according to Claim 9, characterised in that the two lines of the ends (121) define a plane which is virtually perpendicular to the direction of the force to be withstood and absorbed.

12. Application of an absorber according to one of Claims 1 to 11 to the protection of motor vehicles.
